# FASCICULE DE BREVET EUROPEEN

(11) **EP 1 790 067 B1**
(45) Date de publication et mention de la délivrance du brevet: **08.03.2017**
(21) Numéro de dépôt: 05800598.4
(22) Date de dépôt: 31.08.2005
(51) Int. Cl.: H02P 1/46, H02P 6/08, H02P 9/08

(54) **MODULE DE COMMANDE ET DE PUISSANCE POUR UNE MACHINE ELECTRIQUE TOURNANTE**
STEUER- UND STROMVERSORGUNGSMODUL FÜR EINE ROTIERENDE ELEKTRISCHE MASCHINE
CONTROL AND POWER MODULE FOR A ROTATING ELECTRIC MACHINE

(30) Priorité: 31.08.2004 FR 0409242
(43) Date de publication de la demande: 30.05.2007
(73) Titulaire: VALEO EQUIPEMENTS ELECTRIQUES MOTEUR, 94000 Créteil Cedex (FR)
(72) Inventeur: PIERRET, Jean-Marie, F-75012 Paris (FR); LOUISE, Christophe, F-94160 Alfortville (FR)
(74) Mandataire: de Lambilly Delorme, Marie Pierre
(86) Numéro de dépôt international: PCT/FR2005/002176
(87) Numéro de publication internationale: WO 2006/027480

(56) Documents cités:
- EP-A- 0 357 183
- EP-A- 0 762 596
- FR-A- 2 842 042
- PATENT ABSTRACTS OF JAPAN vol. 1996, no. 05, 31 mai 1996 (1996-05-31) & JP 08 019287 A (MATSUSHITA ELECTRIC IND CO LTD), 19 janvier 1996 (1996-01-19)
- PATENT ABSTRACTS OF JAPAN vol. 1997, no. 04, 30 avril 1997 (1997-04-30) & JP 08 322283 A (ISUZU MOTORS LTD), 3 décembre 1996 (1996-12-03)

## Description

### Domaine de l'invention

La présente invention concerne de manière générale la commande des machines électriques tournantes polyphasées, notamment les machines de ce type qui sont réversibles, telles que les alterno-démarreurs.

L'invention trouve des applications, en particulier, dans le domaine des véhicules automobiles. Elle s'applique plus généralement à tout alternateur ou alterno-démarreur, moteur-alternateur ou encore moteur-alternateur-démarreur, ayant un pont de d'interrupteurs comme éléments redresseurs de tension, des circuits pilotes ("driver circuits", en anglais) pour piloter ces interrupteurs, et au moins une liaison de communication entre chaque circuit pilote et un circuit de commande formant régulateur de la tension redressée, et assurant la commande et la gestion du démarrage.

### Etat de la technique

Dans un alternateur classique, qui utilise en général des diodes de puissance en tant qu'éléments redresseurs de tension, le régulateur (piloté ou non) intègre le plus souvent une fonction dite d'auto-amorçage ("self-start" en anglais). Cette fonction est utilisée pour permettre à l'alternateur de débiter du courant même s'il n'a pas reçu l'ordre de le faire (fil coupé, connecteur cassé ou démonté...), alors que le moteur thermique du véhicule automobile tourne, entraînant la rotation de l'alternateur. Cette fonction peut être basée sur la surveillance d'une tension différentielle entre deux phases de l'alternateur et la détection d'une valeur supérieure à un seuil prédéfini. En cas de telle détection, le régulateur qui était en mode de repos (pour économiser l'énergie tirée de la batterie du véhicule) est "réveillé", et la machine est amorcée.

Dans le cas d'un alterno-démarreur, d'un moteur-alternateur ou d'un moteur-alternateur-démarreur, mais aussi d'un alternateur utilisant des interrupteurs comme éléments redresseurs de tension, on peut souhaiter utiliser la même méthode. Cette méthode présente toutefois l'inconvénient de requérir deux liaisons supplémentaires entre les circuits pilotes et le circuit de commande. En effet, pour disposer de deux informations de phase au niveau du circuit de commande, il faut prévoir deux bornes de connexion supplémentaires sur le module de commande ou régulateur, et en outre une borne de connexion de sortie de phase au niveau de chaque module de puissance intégrant les interrupteurs.

Par le document FR2842042A, il est connu un module de contrôle et de puissance d'un alternateur-démarreur pour véhicule automobile. Le module est connecté entre l'alternateur-démarreur, un réseau de bord et une ligne de masse du véhicule. Le module comporte un pont de transistors à plusieurs branches, une unité de commande pour comparer une tension de phase de l'alternateur-démarreur avec une tension de référence et commander les transistors en fonction du résultat de la comparaison. L'unité de commande comprend un circuit d'attaque de puissance dit « driver » pour chaque branche du pont de transistors et un circuit de contrôle pour commander les drivers. Le driver est connecté à proximité des transistors de la branche.

Le document JP08-019287 (Patent Abstract of Japan) décrit un circuit de commande de puissance pour un moteur électrique, autorisant une réduction du bruit électromagnétique généré par le moteur. Un microprocesseur fournit des signaux de commande de phase pour l'alimentation en courant des bobinages de phase du moteur. Les forces contre-électromotrice générées dans les bobinages et consécutives à la rotation du moteur, ainsi qu'une chute de tension due au courant alimentant le moteur sont détectées, numérisées et fournies en entrée au microprocesseur. Des moyens sont prévus dans le microprocesseur pour mettre en forme les signaux de commande de phase en gérant des intervalles temporels et des décalages temporels entre eux en fonction des forces contre-électromotrices et de la chute de tension fournies au microprocesseur.

Par JP08-322283 (Patent Abstract of Japan), il est connu un circuit de commande d'onduleur pour un moteur synchrone de type à aimants permanents. Ce circuit de commande comporte des moyens pour détecter un ordre de connexion des phases du moteur à ses ports de commande. Après la connexion du moteur au circuit de commande d'onduleur, l'arbre du moteur est tourné dans un sens direct et les aimants permanents produisent des tensions induites dans les bobinages statoriques. Un détecteur de phase prévu dans le circuit de commande détecte les phases des tensions induites et celles-ci sont utilisées par une unité de traitement pour déterminer l'ordre de connexion des phases. Cet ordre des phases est mémorisé dans une mémoire non-volatile et est utilisé pour former les signaux de commande pour actionner le moteur.

### Objet de l'invention

Pour pallier ces inconvénients, il est proposé de tirer parti des spécificités de l'application à une machine utilisant des interrupteurs comme éléments redresseurs de tension.

En effet, un premier aspect de l'invention propose un module de commande et de puissance pour machine électrique tournante tel que défini dans la revendication 1 ci-annexée.

Ainsi, l'invention permet de transmettre, durant le mode de repos de la machine, des informations via des liaisons de communication existant classiquement entre le circuit de commande et chaque circuit pilote, mais précédemment utilisées uniquement en dehors du mode de repos (c'est-à-dire lorsque le circuit de commande est réveillé) pour une fonction en mode actif.

Ainsi, l'invention permet d'éviter l'utilisation des moyens d'interconnexion supplémentaires énumérés plus haut.

De plus, lors d'une détection de phase, les signaux à transmettre comportent au moins une première et une deuxième informations de phase à transmettre respectivement via une première et une deuxième liaisons de communication. Ainsi, la première et deuxième liaisons de communication faisant partie des liaisons de communication utilisées en mode actif, on assure l'entrée dans le circuit de commande de deux informations de phase de la machine pour la réalisation de la fonction d'auto-amorçage.

Dans un mode de réalisation préférentiel, la première et la deuxième liaisons de communication sont des liaisons de synchronisation de phase, lesdites liaisons de synchronisation de phase étant adaptées pour transmettre lors d'un mode actif des signaux de synchronisation de phase à un circuit pilote associé. Ainsi, on utilise des liaisons qui existent déjà pour chaque circuit pilote, permettant la transmission de chaque information de phase.

Dans un premier mode de réalisation préférentiel, la pluralité de liaison de communication sont des liaisons bidirectionnelles. Ainsi, cela permet entre autre d'effectuer une remontée de défaut d'un circuit pilote vers le circuit de commande par l'intermédiaire desdites liaisons de communication lors d'un mode actif.

Dans un deuxième mode de réalisation la pluralité de liaisons de communication sont des liaisons de commande. Ainsi, cela permet d'avoir des circuits pilotes plus simples à réaliser que dans le cas de liaisons bidirectionnelles, lesdits circuits pilotes n'étant plus qu'en mode de réception et donc « esclave ».

Dans un mode de réalisation non limitatif, chaque première et deuxième liaison de communication est couplée à une extrémité respective des enroulements de phase de la machine, une Information de phase étant issue d'un enroulement de phase ; et le circuit pilote associé comprend des moyens de moyens de commutation pour Isoler ladite liaison de l'information de phase en dehors du mode repos. Ainsi, le circuit de commande dispose d'au moins deux informations de phase (N en réalité, puisque les N circuits pilotes sont de préférence Identiques) pendant le mode de repos. Dès le réveil du circuit de commande (par une liaison de protocole, par un fil de réveil, ou sur détection de la rotation de la machine), l'alimentation des circuits pilotes est activée. Ces derniers sont alors réveillés et inhibent l'information de phase sur la liaison de communication correspondante, assurant ainsi un fonctionnement normal du module. Ainsi, lesdites première et deuxième liaisons de communication peuvent transmettre d'autres informations lors d'un mode actif, par exemple des signaux de synchronisation de phase ou des informations de remontée de défaut.

Dans un mode de réalisation non limitatif, les moyens de commutation du circuit pilote associé comprennent un interrupteur commandé ayant :
- une première borne principale reliée à une liaison de communication via une première résistance et à une sortie du circuit pilote associé destinée à être couplée à une extrémité d'un enroulement de phase via une deuxième résistance,
- une deuxième borne principale couplée à une borne de masse,
- et une borne de commande couplée à une borne d'alimentation du circuit pilote associé, laquelle borne d'alimentation reçoit une tension d'alimentation uniquement en dehors du mode de repos.

Ce mode de réalisation est particulièrement simple, et tire avantage du fait que le circuit pilote reçoit sélectivement une tension d'alimentation, en dehors du mode de repos seulement.

Dans un mode de réalisation avantageux non limitatif, le déphasage est détecté par détection d'une amplitude différentielle entre lesdites première et deuxième informations de phase.

De plus, dans un mode de réalisation non limitatif, l'unité de détection comprend des moyens comparateurs à seuil agencés pour émettre le signal de réveil lorsque ladite amplitude différentielle est supérieure à une valeur de seuil déterminée.

Ainsi, l'utilisation d'une amplitude différentielle entre deux phases permet d'obtenir un auto-amorçage à vitesse moteur, donc vitesse machine plus faible. Par conséquent, l'auto-amorçage est plus rapide que dans le cas où l'on n'utiliserait qu'une seule information de phase. En effet, dans la cas d'une seule information de phase, il faut abaisser la valeur de seuil déterminée et pour cela il faut utiliser des composants actifs qui consomment de l'énergie supplémentaire. Par ailleurs, le fait d'utiliser deux Informations de phase plutôt qu'une seule permet d'obtenir un module permettant un auto-amorçage plus stable. Il y a moins de risque d'auto-amorçage intempestif du à des perturbations impulsionnelles d'une information de phase.

Dans un mode de réalisation non limitatif, les moyens comparateurs à seuil comprennent un transistor bipolaire. Ainsi, contrairement à un circuit actif tel qu'un comparateur qui comporte un consommation statique due notamment à une alimentation attribuée, le transistor bipolaire ne consomme que lorsqu'on a dépassé la valeur de seuil déterminée, i.e. quand le transistor bipolaire possède une jonction passante.

Dans un mode de réalisation non limitatif, le circuit de commande comprend des moyens de commutation pour isoler ladite unité de détection desdites première et deuxième informations de phase en dehors du mode de repos. Ainsi, cela permet de désactiver en mode actif la détection de phase.

Dans un mode de réalisation non limitatif, les moyens de computation de l'unité de détection comprennent, pour chacune des premières et deuxièmes liaisons de communication, un interrupteur commandé ayant :
- une première borne principale reliée à ladite liaison de communication via une première résistance et à une entrée dédiée de l'unité de détection via une deuxième résistance,
- une deuxième borne principale reliée à une borne de masse, et
- une borne de commande reliée à une borne d'alimentation du circuit de commande via une résistance, laquelle borne d'alimentation reçoit une tension d'alimentation uniquement en dehors du mode de repos. Ainsi, ici encore, des moyens de commutation particulièrement simples exploitent le fait que le circuit de commande possède des éléments qui ne sont pas alimentés dans le mode de repos.

Un second aspect de l'invention se rapporte à une machine électrique tournante polyphasée telle qu'un alterno-démarreur ou moteur-alternateur ou un moteur-alternateur-démarreur, qui comprend un module de commande et de puissance selon le premier aspect.

### Brève description des Figures

D'autres aspects, caractéristiques et avantages de l'invention apparaîtront encore à la lecture de la description qui va suivre. Celle-ci est purement illustrative et doit être lue en regard des dessins annexés sur lesquels :
- la Fig. 1 est un schéma d'une machine électrique tournante polyphasée selon le troisième aspect de l'invention;
- la Fig. 2 est un schéma partiel d'un mode de réalisation d'un circuit pilote compris dans un module de commande et de puissance selon le premier aspect de l'invention; et,
- la Fig. 3 est un schéma partiel d'un mode de réalisation d'un circuit de commande compris dans un module de commande et de puissance de la Fig. 2.

### Description détaillée de modes de réalisation préférentiels de l'invention

La présente invention va maintenant être décrite dans le cadre de son application à un alterno-démarreur, étant entendu qu'elle s'applique de façon plus générale à toute machine électrique tournante polyphasée telle que celles mentionnées en introduction.

Un alterno-démarreur peut fonctionner en mode démarreur, pour démarrer le moteur thermique du véhicule automobile dans lequel il est installé, ou en mode alternateur, pour redresser et réguler la tension générée par la rotation du moteur thermique. L'alterno-démarreur est ainsi une machine réversible. En dehors de ces deux modes actifs, l'alterno-démarreur est dans un mode de repos.

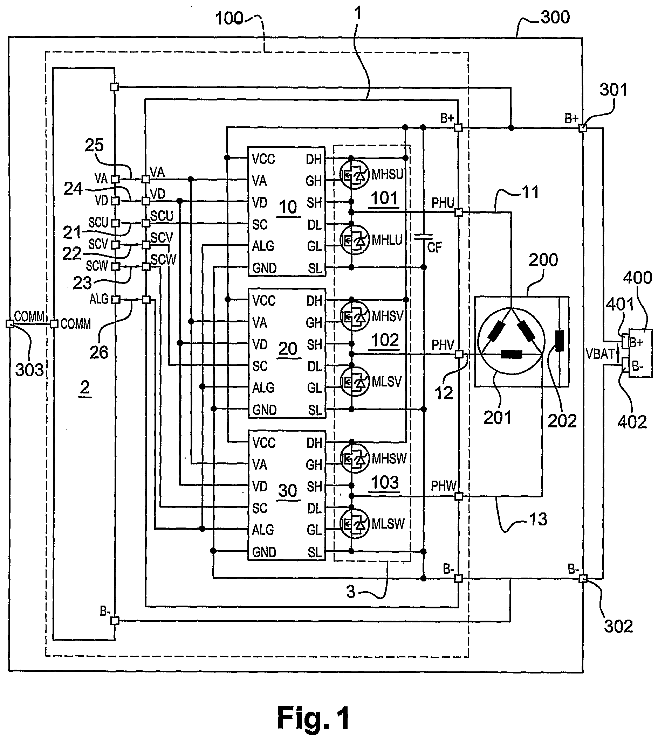

La Fig. 1 montre de façon schématique un alterno-démarreur 300. L'alterno-démarreur 300 comprend :
- une partie électromécanique 200,
- une partie électronique formant module de commande et de puissance 100, ce dernier comprenant un module de puissance 1 et un circuit de commande 2, et
- deux bornes d'alimentation 301 et 302 respectivement reliées aux bornes 401 et 402 d'une batterie 400.
Dans un exemple non limitatif, la batterie 400 est une batterie, par exemple, 12 volts. La borne 401 est sa borne positive et la borne 402 est sa borne négative. On note B+ et B- les potentiels électriques sur les bornes 401 et 402, respectivement. Classiquement, la borne 402 est connectée au châssis du véhicule en sorte que le potentiel B- se confond avec le potentiel de masse. On note VBAT la tension batterie, c'est-à-dire la différence de potentiel électrique entre les bornes 401 et 402 de la batterie 400.

L'alterno-démarreur 300 comprend en outre une entrée de commande 303, classiquement couplée à un commutateur de démarrage (position contact clef fermée, non représenté) du véhicule dans lequel l'alterno-démarreur 300 est installé via un boîtier de contrôle. Lorsque le commutateur de démarrage est fermé, le moteur thermique du véhicule est démarré. L'alterno-démarreur étant entraîné en rotation par la rotation du moteur thermique, ceci provoque également la rotation de l'alterno-démarreur. La fermeture du commutateur de démarrage provoque normalement la réception d'un signal de démarrage COMM sur l'entrée 303 de l'alterno-démarreur 300. C'est pour parer au défaut de réception de ce signal COMM que le circuit de commande 2 implémente une fonctionnalité d'auto-amorçage. Cette fonctionnalité sert donc notamment lorsque la machine marche dans un mode dégradé. Ainsi, on peut utiliser cette fonction d'auto-amorçage pour permettre, par exemple, un redémarrage en pente, que la clef de contact soit ouverte ou fermée.

La partie électro-mécanique 200 comprend :
- un élément induit 201, et
- un élément inducteur 202.
Dans un exemple non limitatif, l'induit 201 est le stator, et l'inducteur 202 est le rotor. De plus, le stator comprend un nombre déterminé N d'enroulements de phase, où N est, de préférence, un nombre entier strictement supérieur à l'unité. Dans l'exemple considéré ici, N est égal à 3. Dit autrement, l'alterno-démarreur selon le présent exemple de réalisation est une machine à inducteur rotorique, et à induit statorique triphasé. Dans l'exemple illustré à la Fig. 1, les enroulements de phase de l'élément induit 201 sont disposés selon une configuration en anneau, montage en triangle, par exemple. Néanmoins, ceci n'est pas limitatif, une configuration en étoile étant également envisageable.

Le module de commande et de puissance 100 comprend :
- un module de puissance 1, et
- un circuit de commande 2 qui peut avantageusement être réalisé sous le forme d'un ASIC (Application Specific Integrated Circuit).

Dans un mode de réalisation non limitatif, le module de puissance 1 comprend :
- un pont d'interrupteurs 3 ayant trois branches, respectivement associées aux trois enroulements de phase de l'induit 201, et
- trois circuits pilotes 10, 20 et 30 respectivement associés à chacune des trois branches du pont de transistors de puissance 3.
Dans un mode de réalisation préférentiel, un interrupteur comprend au moins un transistor de puissance. Par abus de langage, on parlera donc de pont de transistors de puissance par la suite.

Les circuits pilotes 10, 20 et 30 servent à piloter la branche à laquelle ils sont respectivement associés. Dans ce qui suit, les lettres U, V et W utilisées comme suffixe de signes de référence ou de noms de signaux, servent à distinguer chacune des trois phases de l'induit 201. Les circuits pilotes 10, 20 et 30 sont préférentiellement identiques les uns aux autres, ce qui simplifie la conception et donc le coût du module 100. Ils sont par exemple réalisés sous des formes de circuits monolithiques respectifs.

Par mesure de simplicité, dans ce qui suit et aux figures, les entrées et les sorties du circuit 2 et du module 100 ainsi que les entrées des circuits pilotes 10, 20, et 10, sont référencées comme les signaux qu'elles reçoivent ou délivrent, selon le cas. Une première branche 101 du pont de transistors de puissance 3, associée au circuit pilote 10 comprend un transistor MOS supérieur MHSU (ou transistor "High Side") en série avec un transistor MOS inférieur MLSU (ou transistor "Low Side"). Il s'agit par exemple de transistors NMOS. Le drain, la grille de commande, et la source du transistor MHSU sont respectivement reliés à des sorties DH, GH et SH du circuit pilote 10. De même, le drain, la grille de commande, et la source du transistor MLSU sont respectivement reliés à des sorties DL, GL et SL du circuit pilote 10. En outre, le drain du transistor MLSU et la source du transistor MHSU, qui sont reliés ensemble, forment le noeud de sortie de la branche 101. Cette sortie 101 délivre un premier signal PHU de commande de phase.

De même, une deuxième branche 102 du pont de transistors de puissance 3 comprend un transistor MOS supérieur MHSV et un transistor MOS inférieur MLSV de même nature que les transistors MHSU et MLSU, et connectés au circuit pilote 20 de la même façon que les transistors MHSU et MLSU sont connectés au circuit pilote 10. La source du transistor MLSV et le drain du transistor MHSV, qui sont reliés ensemble, forment le noeud de sortie de la branche 102. Cette sortie 102 délivre un deuxième signal PHV de commande de phase.

Enfin, la troisième branche 103 du pont de transistors de puissance 3 comprend un transistor MOS supérieur MHSW et un transistor MOS inférieur MLSW de même nature que les transistors MHSU et MLSU, et connecté au circuit pilote 30 de la même façon que les transistors MHSU et MLSU sont connectés au circuit pilote 10. La source du transistor MLSW et le drain du transistor MHSW, qui sont reliés ensemble, forment le noeud de sortie de la branche 103. Cette sortie 103 délivre un troisième signal PHW de commande de phase.

Les signaux de synchronisation de phase PHU, PHV et PHW sont disponibles sur des sorties respectives du module de puissance 1. Lorsque le module 100 est installé dans l'alterno-démarreur 300, ces sorties sont couplées aux enroulements de phase de l'induit 201, via des liaisons respectivement 11, 12 et 13.

Le drain du transistor supérieur de chaque branche du pont de transistors de puissance 3, à savoir les drains des transistors MHSU, MHSV et MHSW sont reliés à une première borne d'alimentation du circuit 1, qui reçoit le potentiel B+ en étant connectée à la borne 301 de l'alterno-démarreur. De même, la source du transistor inférieur de chaque branche du pont de transistor de puissance 3, à savoir les sources des transistor MLSU, MLSV et MLSW, sont reliées à une seconde borne d'alimentation du circuit 1, qui est portée au potentiel B- en étant connectée à la borne 302 de l'alterno-démarreur. En outre, le circuit de puissance 1 comprend un condensateur de filtrage CF connecté entre lesdites deux bornes d'alimentation du circuit 1.

Une première et une seconde bornes d'alimentation du circuit de commande 2 sont portées respectivement au potentiel B+ et au potentiel B-, en étant respectivement connectées à l'entrée 301 et à l'entrée 302 de l'alterno-démarreur. Le circuit 2 comprend six sorties pour délivrer des signaux respectivement SCU, SCV, SCW, VA, VD et ALG. Ces signaux sont transmis via une pluralité de liaisons de communication respectivement 21 à 26, sur des entrées respectives du module de puissance 1. Chacun des signaux VA, VD et ALG est transmis simultanément sur des entrées respectives des circuits pilotes 10, 20 et 30.

Dans un premier mode de réalisation, ladite pluralité de liaisons de communication 21 à 26 sont des liaisons de commande. C'est-à-dire que lesdites liaisons sont utilisées en mode actif par le circuit de commande 2 pour générer des signaux de commande vers les circuits pilotes, par exemple les signaux SCU, SCV, SCW en mode démarreur, signaux qui seront décrits plus en détail par la suite.

Dans un deuxième mode de réalisation préférentiel, ladite pluralité de liaisons de communication 21 à 26 sont des liaisons bidirectionnelles. C'est-à-dire qu'elle sont utilisées en mode actif par le circuit de commande 2 pour transmettre des signaux vers les circuits pilotes 10, 20 et 30, et par lesdits circuits pilotes pour transmettre des signaux vers le circuit de commande 2. Ainsi, par exemple en mode alternateur, on peut facilement effectuer une fonction de diagnostique telle qu'une remontée de défaut dans laquelle on transmet par exemple une information de phase d'un circuit pilote vers le circuit de commande pour vérifier si une phase est court-circuitée ou non.

On notera que le signal VA est actif (par exemple VA=1) dans le mode actif de fonctionnement en alternateur, et inactif le reste du temps. A l'inverse, le signal VD est actif dans le mode actif de fonctionnement en démarreur, et inactif le reste du temps.

Lorsque ni l'un ni l'autre des signaux VA et VD n'est actif, le module de commande et de puissance 100 est dans le mode de repos.

Le signal ALG fournit un ordre de réveil au circuit pilote 10, 20 et 30 en dehors du mode de repos, et il leur fournit en même temps une haute tension en mode actif de fonctionnement en mode alternateur ou démarreur. Cette haute tension est égale à environ 30 volts.

Les signaux SCU, SCV et SCW sont des signaux de synchronisation de phase, générés dans le mode actif de fonctionnement en démarreur, pour permettre aux circuits pilotes 10, 20 et 30 de commander les phases de la machine de façon appropriée, c'est-à-dire pour démarrer et faire tourner la machine dans le bon sens. A cet effet, les signaux SCU, SCV et SCW sont fournis sur une entrée SC des circuits pilotes 10, 20 et 30 respectivement. Ces signaux sont générés par le module de commande 2 en fonction d'informations sur la position du rotor, qui sont fournies par des capteurs de position non représentés.

Dit autrement, dans un mode actif, modes démarreur ou alternateur dans l'exemple pris ici, de l'alterno-démarreur 300, toutes les liaisons de ladite pluralité de liaisons 21-26 sont utilisées pour transmettre des signaux, entre le circuit de commande 2 et lesdits circuits pilotes 10, 20, 30, utiles pour effectuer une fonction liée à un mode actif dudit alterno-démarreur, telle qu'un démarrage ou un débit de courant respectivement en mode démarreur ou alternateur.

Les circuits pilotes 10, 20 et 30 comprennent en outre chacun une première borne d'alimentation VCC connectée à la première borne d'alimentation du module de puissance 1 pour recevoir le potentiel électrique B+, ainsi qu'une seconde borne d'alimentation GND connectée à la seconde borne d'alimentation du module de puissance 1 pour recevoir le potentiel B-.

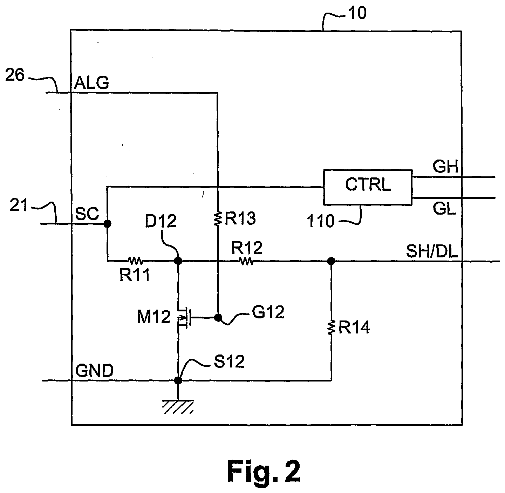

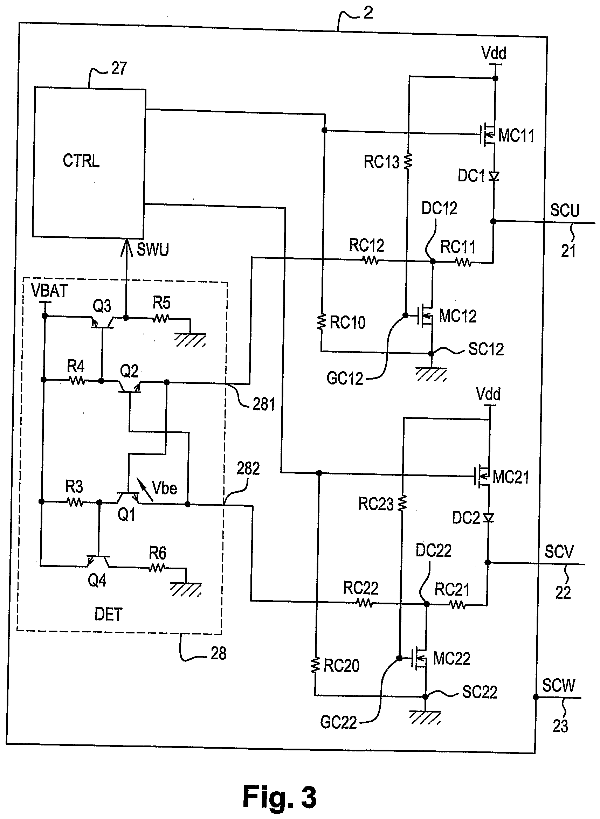

Un multiplexage de deux au moins des liaisons de communication 21, 22 et 23, pour assurer la fonction d'auto-amorçage, peut être obtenu en adaptant les circuits pilotes 10, 20 et 30 et le circuit de commande 2, ainsi qu'il va maintenant être présenté en regard des schémas de la Fig. 2 et de la Fig. 3.

Les moyens des circuits pilotes 10, 20 et 30 qui participent à la mise en oeuvre de l'invention ou servent à éclairer son fonctionnement, vont maintenant être décrits en référence au schéma de la Fig. 2. Cette figure illustre le cas du circuit pilote 10. Mais tous les circuits pilotes étant de préférence identiques, la description qui suit est valable pour chacun d'eux.

Le circuit pilote 10 comprend une unité de commande 110 ayant deux sorties respectivement couplées aux sorties GH et GL du circuit 10. Ainsi, l'unité 110 génère les signaux appliqués en dehors du mode de repos sur les grilles de commande des transistors MHSU et MLSU conformément au mode actif de fonctionnement courant (mode démarreur si VD=1, ou mode alternateur si VA=1). L'unité 110 possède une entrée qui est reliée à l'entrée SC pour recevoir le signal de synchronisation de phase SCU, via la liaison de communication 21 reliant de façon connue le circuit pilote 10 au circuit de commande 2. Le signal SCU est un signal logique (i.e., binaire). Ladite liaison 21 est ainsi une liaison de synchronisation de phase, une telle liaison permettant de transmettre lors d'un mode actif un signal de synchronisation de phase au circuit pilote 10.

Ici, en outre, la liaison de communication 21 est couplée à une extrémité associée des enroulements de phase, une information de phase étant issue d'un enroulement de phase. A cet effet, elle est couplée à la sortie SH et/ou à la sortie DL du circuit pilote 10, par exemple via deux résistances R11 et R12 disposées en série. Ainsi, en plus de sa fonction habituelle dans le mode démarreur consistant à transmettre un signal logique de synchronisation de phase SCU, la liaison 21 sert également à transmettre une information de phase issue d'un enroulement de phase, du circuit 10 vers le module 2, au moins pendant le mode de repos. Dit autrement, la liaison de communication 21 forme également une liaison de surveillance de phase dans le mode de repos.

L'information de phase transmise est, dans l'exemple non limitatif pris ici, une tension analogique. Plus particulièrement, il s'agit d'une tension dérivée de la tension de phase. En variante, on pourrait transmettre une information de phase d'une autre nature, par exemple un signal numérique, mais au prix d'une complexité du module 100 et donc d'un coût de fabrication augmenté.

Lorsque le couplage entre la liaison 21 et la sortie SH et/ou la sortie DL du circuit 10 est réalisé, le circuit pilote 10 comprend avantageusement des moyens de commutation pour isoler la liaison 21 de la tension de phase en dehors du mode de repos. Ces moyens de commutation sont par exemple disposés entre la liaison 21 et la sortie SH et/ou la sortie DL du circuit 10 à laquelle elle est couplée.

Dans un mode de réalisation non limitatif, ces moyens comprennent un transistor M12, par exemple un transistor NMOS, formant interrupteur commandé. Le drain D12 du transistor M12 est relié à la liaison de surveillance de phase 21 via la première résistance R11, et à la sortie SH/DL du circuit pilote 10 via la deuxième résistance R12, sortie SH/DL couplée à l'extrémité de l'enroulement de phase associée. Sa source S12 est reliée à la borne de masse GND du circuit 10. Enfin, sa grille de commande G12 est couplée à l'entrée d'alimentation ALG du circuit 10, laquelle reçoit la tension d'alimentation ALG uniquement en dehors du mode de repos. Par exemple, la grille G12 est reliée à l'entrée ALG via une résistance R13. Enfin, une résistance R14 est connectée entre la sortie SH et/ou la sortie DL du circuit 10 d'une part, et sa borne de masse GND d'autre part.

Dans un exemple de réalisation non limitatif, les valeurs des résistances R11-R14 sont égales à 10 kΩ.

Le fonctionnement du circuit pilote est le suivant.

Dans le mode de repos (VA=0 et VD=0), l'alimentation du circuit pilote est coupée, pour assurer une consommation statique limitée aux courants de fuites. A cet effet, le signal ALG correspond à une tension nulle. Il en résulte que le transistor M12 est bloqué. On retrouve alors sur la liaison 21 une tension dérivée de la tension de phase disponible sur la sortie SH/DL (à travers le pont diviseur de tension formé des résistances R11, R12 et R14).

Dès le réveil du circuit pilote (sur détection d'une tension d'alimentation ALG fournie par le circuit de commande 2), l'alimentation est établie. Le transistor M12 est alors fermé (par la tension ALG via la résistance R13 de "pull-up" sur sa grille de commande G12), isolant ainsi la liaison 21 de la tension de phase disponible sur la sortie SH/DL. La transmission du signal de synchronisation de phase SCU prévue en mode démarreur peut avoir lieu. On rappellera que le signal de synchronisation de phase SCU découlent des informations de position de rotor, ledit signal étant généralement sous forme numérique.

Dans le circuit de commande 2, des moyens du même type que les moyens de commutation des circuits pilotes tels que présentés ci-dessus, sont prévus pour permettre le multiplexage de la liaison de communication 21. Ceci permet ainsi une transmission d'un signal information de phase (d'un circuit pilote 10 vers le circuit de commande 2) ou un signal de synchronisation de phase (du circuit de commande 2 vers un circuit pilote 10).

En outre, il est prévu des moyens effectuant le réveil du circuit de commande 2 ou régulateur par détection d'une différence de potentiel entre deux tensions de phase supérieure à une tension de seuil Vbe (par exemple comprise entre 0.6 V et 1 V).

Ainsi, dans un mode de repos, au moins une liaison 21 de ladite pluralité de liaison 21 à 26 est utilisée pour transmettre des signaux, ici des informations de phase, entre le circuit de commande 2 et ledit circuit pilote 10, utiles pour effectuer une fonction liée au mode repos de l'alterno-démarreur 300, ladite fonction étant ici une détection de phase ; et lors de la détection de phase, les signaux à transmettre comportent une première et une deuxième informations de phase (tensions) à transmettre respectivement via une première 21 et une deuxième liaison de communication 22.

A la Fig. 3, on a schématiquement représenté un exemple de réalisation des moyens du circuit de commande 2 qui participent à la mise en oeuvre de l'invention.

Comme nous allons le voir en détail plus loin, le circuit de commande 2 est construit pour dans un mode de repos de la machine, surveiller au moins une première PHU et une deuxième PHV informations de phase transmises par les circuits pilotes 10, 20, 30 via respectivement une première 21 et une deuxième 22 liaisons de surveillance de phase, et pour se réveiller en réponse à une configuration déterminée desdites première et seconde tensions de phase, et en ce que lesdites première et deuxièmes liaisons de surveillance de phase sont comprises dans ladite pluralité de liaisons de communication utilisées pour commander lesdits circuits pilotes 10, 20, 30 dans un mode actif déterminé. Les informations de phase sont dérivées de tensions de phase. Ainsi, durant un mode de repos, des tensions de phase PHU, PHV, PHW sont transmises sur des liaisons de communication respectives SCU, SCV, SCW existant entre le circuit de commande 2 et chaque circuit pilote 10, 20, 30, mais précédemment utilisées uniquement en dehors du mode de repos pour la commande des circuits pilotes en mode actif. Le circuit de commande dispose alors d'au moins deux tensions de phase pendant le mode de repos. Dans le circuit de commande, une unité de détection de la rotation de la machine les surveille pour permettre le réveil du circuit de commande et l'auto-amorçage de la machine. Dès le réveil du circuit de commande, la tension d'alimentation ALG des circuits pilotes est activée. Ces derniers sont alors réveillés et inhibent la tension de phase sur la liaison de communication correspondante, assurant ainsi un fonctionnement normal dans le mode actif.

A cet effet, le circuit 2 comprend :
- une unité de commande 27, et
- une unité 28 de détection de la rotation de la machine.

L'unité 27 est adaptée pour assurer le fonctionnement de la machine selon les divers modes actifs de celle-ci. En particulier, dans le mode actif de fonctionnement en alternateur, elle forme un régulateur de la tension redressée par les branches du pont de transistors, via des moyens non représentés, qui sont connus en eux-mêmes. Dans le mode actif de fonctionnement en démarreur, elle délivre les signaux de synchronisation de phase ("signaux capteurs") SCU, SCV et SCW, qui sont transmis aux circuits pilotes respectivement 10, 20 et 30, via les liaisons de communication respectivement 21, 22 et 23. Pour des raisons de simplicité, on a seulement représenté un exemple de réalisation des moyens couplant l'unité 27 aux liaisons 21 et 22, sachant que des moyens identiques ou similaires couplent l'unité 27 à la liaison 23.

L'unité 28 a pour fonction d'assurer le réveil du circuit de commande 2, et donc de permettre l'auto-amorçage de la machine, sur détection de la rotation de celle-ci à partir d'une ou plusieurs informations de phase. A cet effet, l'unité 28 est alimentée même dans le mode de repos, à partir de la tension batterie VBAT. De plus, elle est construite pour émettre un signal de réveil SWU, qui est délivré à l'unité de commande 27, en réponse à une configuration déterminée de ladite information de phase ou desdites informations de phase.

A cet effet, l'unité 28 peut être couplée, au moins dans le mode de repos, à deux liaisons de surveillance de phase pour recevoir deux informations de phase respectives. Ces informations de phase sont par exemple issues d'enroulements de phase respectifs. Il peut ainsi s'agir des tensions de phase collectées au niveau de deux enroulements de phase respectifs. Dans ce cas, l'unité 28 peut être construite pour générer le signal de réveil SWU en cas de détection d'un déphasage entre ces tensions de phase, notamment un déphasage supérieur à un seuil déterminé. Ainsi, l'unité 28 peut recevoir, au moins dans le mode repos, une première PHU et une deuxième PHV informations de phase, et émettre un signal de réveil SWU en cas de détection d'un déphasage entre lesdites première et deuxième informations de phase.

Dans un mode de réalisation préférentiel, le déphasage est détecté par détection d'une amplitude différentielle entre lesdites première et deuxième informations de phase. De plus, l'unité de détection 28 comprend des moyens comparateurs à seuil agencés pour émettre le signal de réveil SWU lorsque ladite amplitude différentielle est supérieure à une valeur de seuil déterminée.

L'unité 28 peut alors avantageusement être rigoureusement la même que pour un régulateur d'alternateur classique.

Dans l'exemple de réalisation donné ici, les liaisons de surveillance de phase sont, dans le mode de repos, confondues avec les liaisons de synchronisation de phase 21 et 22 prévues pour permettre au circuit de commande 2 de transmettre les signaux capteurs SCU et SCV aux circuits pilotes respectivement 10 et 20 dans le mode démarreur.

De plus, dans un mode de réalisation préférentiel non limitatif, l'unité de détection 28 est ici couplée à ces liaisons 21 et 22. Dans ce cas, lorsqu'un tel couplage est réalisé, le circuit de commande 2 comprend des moyens de commutation pour isoler ladite unité de détection 28, en dehors du mode de repos, des informations de phase (tensions) éventuellement présentes sur ces liaisons 21 et 22.

Dans un mode de réalisation non limitatif, pour chacune des liaisons de surveillance de phase 21 et 22, les moyens de commutation précités de l'unité 28 peuvent comprendre un interrupteur commandé MC12 ou MC22, sous la forme par exemple d'un transistor NMOS. Le drain respectivement DC12 ou DC22 de ce transistor MC12 ou MC22 est relié à la liaison respectivement 21 ou 22, via une première résistance respectivement RC11 ou RC21. Il est en outre relié à une entrée dédiée, respectivement 281 ou 282, de l'unité de détection 28 via une deuxième résistance respectivement RC12 ou RC22. Sa source respectivement SC12 ou SC22 est reliée à la masse. Et sa grille de commande respectivement GC12 ou GC22 est reliée à la borne d'alimentation du circuit de commande via respectivement une résistance RC13 ou RC23, laquelle borne d'alimentation reçoit une tension d'alimentation Vdd (par exemple égale à 5 volts) uniquement en dehors du mode de repos.

Ainsi, les transistors MC12 et MC22 sont dans un état conducteur (interrupteur fermé) lorsque le circuit de commande est alimenté (Vdd = 5 V), c'est-à-dire dans le mode actif de fonctionnement en démarreur ou en alternateur. De cette façon, les entrées 281, 282 de l'unité 28 sont mises à la masse. Inversement, les transistors MC12 et MC22 sont dans un état bloqué (interrupteur ouvert) lorsque le circuit de commande n'est pas alimenté (Vdd = 0 V), c'est-à-dire dans le mode de repos. De la sorte, les entrées 281 et 282 de l'unité 28 reçoivent les tensions de phases transmises par les circuits pilotes respectivement 10 et 20.

Dans un mode de réalisation, les valeurs des résistances RC11-RC13 et RC21-RC23 sont égales à 10 kΩ.

Un mode de réalisation possible de l'unité 28, en technologie bipolaire, va maintenant être décrit, toujours en référence au schéma de la figure 3. Dans ce mode de réalisation, l'unité 28 comprend une paire différentielle de transistors Q1 et Q2, tels que des transistors bipolaires NPN. Les émetteurs des transistors Q1 et Q2 sont reliés aux entrées respectivement 282 et 281 de l'unité 28. En outre, l'émetteur de Q1 est relié à la base de Q2, et, inversement, l'émetteur de Q2 est relié à la base de Q1. Les collecteurs de Q1 et Q2 sont portés à la tension batterie VBAT, via des résistances respectivement R3 et R4. Un étage de sortie comprend un transistor Q3, par exemple un transistor bipolaire PNP, dont la base est reliée au collecteur de Q2, dont l'émetteur est porté à VBAT, et dont le drain est relié à la masse via une résistance R5. La sortie de l'unité 28, qui délivre le signal SWU, est prise sur le collecteur de Q3. Le niveau haut du signal de réveil SWU est réglé via les résistances R4 et R5. Pour des raisons de symétrie, un étage similaire à l'étage de sortie comprend un transistor Q4, également un transistor bipolaire PNP, dont la base est reliée au collecteur de Q1, dont l'émetteur est relié à VBAT, et dont le drain est relié à la masse via une résistance R6.

Dans un exemple de réalisation, les valeurs des résistances R3 et R4 sont par exemple égales à 200 kΩ, et celles des résistances R5 et R6 sont par exemple égales à 10 kΩ.

Ainsi agencée, la paire de transistors Q1 et Q2, forme un comparateur à seuil permettant de générer le signal de réveil SWU, en détectant le déphasage entre les tensions présentes sur les entrées 281 et 282. Dit autrement, le signal de réveil SWU est généré (ici par mise à l'état haut) lorsque l'amplitude différentielle entre les tensions ramenées sur les entrées 281 et 282 (issues des enroulements de phase de la machine) est supérieure à une valeur de seuil déterminée. Cette valeur de seuil correspond ici à la tension Vbe (tension base-émetteur représentée à la Fig. 3) des transistors Q1 et Q2.

On notera que, dans ce mode de réalisation, l'information de phase provenant du troisième circuit pilote 30 n'est pas utilisée dans le mode de repos. Néanmoins il est préférable d'avoir une identité des circuits pilotes respectivement associés aux trois phases, en les équipant tous des moyens pour la transmission de l'information de phase associée. Ceci permet de ne pas introduire de dissymétrie entre les circuits pilotes, ce qui simplifie leur conception et leur test, et favorise la symétrie de fonctionnement entre les phases de la machine.

L'invention a été décrite ci-dessus dans un mode de réalisation préféré mais non limitatif. En particulier, les liaisons de surveillance de phase ne sont pas forcément les liaisons de synchronisation de phase SC. Il peut s'agir de toutes liaisons de communication entre le circuit de commande 2 et les circuits pilotes 10, 20 et 30, utilisés de façon connue pour piloter lesdits circuits pilotes dans le mode actif de fonctionnement en démarreur ou en alternateur.

La réalisation matérielle du circuit 100 n'est pas non plus limitée à celle décrite en référence à la Fig. 1. En particulier, un seul circuit monolithique peut regrouper les trois circuits pilotes 10, 20 et 30.

Enfin, le mode actif peut comprendre d'autres modes de fonctionnement tels qu'un mode moteur dans lequel la machine 300 fournit du couple au moteur thermique, ledit couple étant par exemple utilisé comme aide à l'accélération dudit moteur thermique.

## Revendications

1. Module de commande et de puissance (100) pour machine électrique tournante (300) comprenant :
- un pont d'interrupteurs (3) ;
- une pluralité de circuits pilotes (10, 20, 30) associés audit pont d'interrupteurs, pour piloter ledit pont (3);
- un circuit de commande (2) qui génère, dans un mode actif de la machine, des signaux de commande destinés aux circuits pilotes; et
- une pluralité de liaisons de communication (21 à 26) entre lesdits circuits pilotes (10, 20, 30) et ledit circuit de commande (2) ; et
dans un mode actif de la machine (300), toutes les liaisons de ladite pluralité de liaisons (21 à 26) étant utilisées pour transmettre lesdits signaux de commande, du circuit de commande (2) auxdits circuits pilotes (10, 20, 30), utiles pour effectuer une fonction liée au mode actif de ladite machine,
***caractérisé en ce que**,*
dans un mode de repos de la machine (300), des première (21) et deuxième (22) liaisons de communication de ladite pluralité de liaisons de communication (21 à 26) sont utilisées pour transmettre au moins une première (PHU) et une deuxième (PHV) informations de phase, desdits circuits de pilotage (10, 20, 30) audit circuit de commande (2) ; et
le circuit de commande (2) comprend une unité de détection (28) pour recevoir, au moins dans le mode repos, une première (PHU) et une deuxième (PHV) informations de phase et pour émettre un signal de réveil (SWU) commandant une commutation de la machine vers un mode alternateur dudit mode actif en cas de détection d'un déphasage entre lesdites première et deuxième informations de phase.

2. Module de commande et de puissance selon la revendication 1, dans lequel les première et deuxième liaisons de communication sont des liaisons de synchronisation de phase, lesdites liaisons de synchronisation de phase étant adaptées pour transmettre lors du mode actif des signaux de commande de phase (SCU, SCV, SCW) à un circuit pilote associé.

3. Module de commande et de puissance selon la revendication 1 ou 2, selon lequel la pluralité de liaisons de communication (21-26) sont des liaisons bidirectionnelles.

4. Module de commande et de puissance selon l'une quelconque des revendications 1 à 3, selon lequel la pluralité de liaisons de communication (21-26) sont des liaisons de commande.

5. Module de commande et de puissance selon la revendication 1, dans lequel, chaque première et deuxième liaison de communication (21, 22) est couplée à une extrémité respective d'enroulements de phase de la machine, une information de phase (PHU, PHV) étant issue d'un enroulement de phase; et, dans lequel le circuit pilote associé (10) comprend des moyens de commutation (M12, R11-R13) pour isoler ladite liaison (21, 22) de l'information de phase en dehors du mode de repos.

6. Module de commande et de puissance selon la revendication 5, dans lequel les moyens de commutation (M12, R11-R13) comprennent un interrupteur commandé (M12) ayant :
- une première borne principale (D12) reliée à une liaison de communication (21) via une première résistance (R11) et à une sortie (SH/DL) du circuit pilote associé destinée à être couplée à une extrémité d'un enroulement de phase via une deuxième résistance (R12),
- une deuxième borne principale (S12) couplée à une borne de masse (GND), et
- une borne de commande (G12) couplée à une borne d'alimentation (ALG) du circuit pilote associé, laquelle borne d'alimentation reçoit une tension d'alimentation (ALG) uniquement en dehors du mode de repos.

7. Module de commande et de puissance selon l'une quelconque des revendications 1 à 6, dans lequel le déphasage est détecté par détection d'une amplitude différentielle entre lesdites première et deuxième informations de phase (PHU, PHV).

8. Module de commande et de puissance selon la revendication 7, dans lequel l'unité de détection (28) comprend des moyens comparateurs à seuil (Q1,Q2) agencés pour émettre le signal de réveil (SWU) lorsque ladite amplitude différentielle est supérieure à une valeur de seuil déterminée (Vbe).

9. Module de commande et de puissance selon la revendication 8, dans lequel les moyens comparateurs à seuil comprennent un transistor bipolaire.

10. Module de commande et de puissance selon l'une quelconque des revendications 1 à 9, dans lequel le circuit de commande (2) comprend des moyens de commutation (MC12, RC11-RC13, MC22, RC21-RC23) pour isoler ladite unité de détection (28) desdites première (PHU) et deuxième (PHV) informations de phase en dehors du mode de repos.

11. Module de commande et de puissance selon la revendication 10, dans lequel les moyens de commutation (MC12, RC11-RC13, MC22, RC21-RC23) de l'unité de détection (28) comprennent, pour chacune des première et deuxième liaisons de communication (21,22), un interrupteur commandé (MC12, MC22) ayant :
- une première borne principale (DC12, DC22) reliée à ladite liaison de communication (21,22) via une première résistance (RC11, RC21) et à une entrée dédiée (281, 282) de l'unité de détection (28) via une deuxième résistance (RC21, RC22),
- une deuxième borne principale (SC12, SC22) reliée à une borne de masse, et
- une borne de commande (GC12, GC22) reliée à une borne d'alimentation du circuit de commande via une résistance (RC13), laquelle borne d'alimentation reçoit une tension d'alimentation (Vdd) uniquement en dehors du mode de repos.

12. Machine électrique tournante polyphasée (300) comprenant un module de commande et de puissance (100) selon l'une quelconque des revendications 1 à 11.

13. Machine électrique tournante réversible (300) comprenant un module de commande et de puissance (100) selon l'une quelconque des revendications 1 à 12.

## Patentansprüche

1. Steuerungs- und Leistungsmodul (100) für drehende elektrische Maschine (300), das Folgendes umfasst:
- eine Unterbrecherbrücke (3);
- mehrere Vorsteuerschaltungen (10, 20, 30), die der Unterbrecherbrücke zugeordnet sind, um die Brücke (3) vorzusteuern;
- eine Steuerschaltung (2), die in einer aktiven Betriebsart der Maschine Steuersignale erzeugt, die für die Vorsteuerschaltungen bestimmt sind; und
- mehrere Kommunikationsverbindungen (21 bis 26) zwischen den Vorsteuerschaltungen (10, 20, 30) und der Steuerschaltung (2);
wobei in der aktiven Betriebsart der Maschine (300) sämtliche der mehreren Verbindungen (21 bis 26) verwendet werden, um die Steuersignale von der Steuerschaltung (2) an die Vorsteuerschaltungen (10, 20, 30) zu übertragen, die nützlich sind, um eine mit der aktiven Betriebsart der Maschine in Beziehung stehende Funktion auszuführen,
**dadurch gekennzeichnet, dass**
in einer Ruhebetriebsart der Maschine (300) eine erste (21) und eine zweite (22) Kommunikationsverbindung der mehreren Kommunikationsverbindungen (21 bis 26) verwendet werden, um wenigstens erste (PHU) bzw. zweite (PHV) Phaseninformationen von den Vorsteuerschaltungen (10, 20, 30) an die Steuerschaltung (2) zu übertragen; und die Steuerschaltung (2) eine Detektionseinheit (28) umfasst, um wenigstens in der Ruhebetriebsart erste (PHU) und zweite (PHV) Phaseninformationen zu empfangen und um ein Aufwecksignal (SWU), das eine Kommutation der Maschine in eine Wechselstromgenerator-Betriebsart der aktiven Betriebsart auszusenden, falls eine Phasenverschiebung zwischen den ersten und den zweiten Phaseninformationen detektiert wird.

2. Steuerungs- und Leistungsmodul nach Anspruch 1, wobei die erste und die zweite Kommunikationsverbindung Phasensynchronisationsverbindungen sind, wobei die Phasensynchronisationsverbindungen dafür ausgelegt sind, in der aktiven Betriebsart Phasensteuersignale (SCU, SCV, SCW) an eine zugeordnete Vorsteuerschaltung zu übertragen.

3. Steuerungs- und Leistungsmodul nach Anspruch 1 oder 2, wobei die mehreren Kommunikationsverbindungen (21-26) bidirektionale Verbindungen sind.

4. Steuerungs- und Leistungsmodul nach einem der Ansprüche 1 bis 3, wobei die mehreren Kommunikationsverbindungen (21-26) Steuerungsverbindungen sind.

5. Steuerungs- und Leistungsmodul nach Anspruch 1, wobei dann, wenn jede erste und jede zweite Kommunikationsverbindung (21, 22) an ein entsprechendes Phasenwicklungsende der Maschine gekoppelt ist, Phaseninformationen (PHU, PHV) von einer Phasenwicklung ausgegeben werden; und wobei die zugeordnete Vorsteuerschaltung (10) Kommutationsmittel (M12, R11-R13) umfasst, um die Verbindung (21, 22) außerhalb der Ruhebetriebsart von den Phaseninformationen zu isolieren.

6. Steuerungs- und Leistungsmodul nach Anspruch 5, wobei die Kommutationsmittel (M12, R11-R13) einen gesteuerten Unterbrecher (M12) umfassen, der Folgendes enthält:
- einen ersten Hauptanschluss (D12), der mit einer Kommunikationsverbindung (21) über einen ersten Widerstand (R11) und mit einem Ausgang (SH/DL) der zugeordneten Vorsteuerschaltung, der dazu bestimmt ist, über einen zweiten Widerstand (R12) mit einem Phasenwicklungsende gekoppelt zu werden, verbunden ist,
- einen zweiten Hauptanschluss (S12), der mit einem Masseanschluss (GND) gekoppelt ist, und
- einen Steueranschluss (G12), der mit einem Versorgungsanschluss (ALG) der zugeordneten Vorsteuerschaltung gekoppelt ist, wobei der Versorgungsanschluss eine Versorgungsspannung (ALG) ausschließlich außerhalb der Ruhebetriebsart empfängt.

7. Steuerungs- und Leistungsmodul nach einem der Ansprüche 1 bis 6, wobei die Phasenverschiebung durch Detektion einer differentiellen Amplitude zwischen den ersten und den zweiten Phaseninformationen (PHU, PHV) detektiert wird.

8. Steuerungs- und Leistungsmodul nach Anspruch 7, wobei die Detektionseinheit (28) Schwellenwert-Komparatormittel (Q1, Q2) umfasst, die dafür ausgelegt sind, das Aufwecksignal (SWU) auszusenden, wenn die differentielle Amplitude größer als ein bestimmter Schwellenwert (Vbe) ist.

9. Steuerungs- und Leistungsmodul nach Anspruch 8, wobei die Schwellenwert-Komparatormittel einen Bipolartransistor umfassen.

10. Steuerungs- und Leistungsmodul nach einem der Ansprüche 1 bis 9, wobei die Steuerschaltung (2) Kommutationsmittel (MC12, RC11-RC13, MC22, RC21-RC23) umfasst, um die Detektionseinheit (28) außerhalb der Ruhebetriebsart von den ersten (PHU) und den zweiten (PHV) Phaseninformationen zu trennen.

11. Steuerungs- und Leistungsmodul nach Anspruch 10, wobei die Kommutationsmittel (MC12, RC11-RC13, MC22, RC21-RC23) der Detektionseinheit (28) sowohl für die erste als auch für die zweite Kommunikationsverbindung (21, 22) einen gesteuerten Unterbrecher (MC12, MC22) umfassen, der Folgendes enthält:
- einen ersten Hauptanschluss (DC12, DC22), der über einen ersten Widerstand (RC11, RC21) mit der Kommunikationsverbindung (21, 22) und über einen zweiten Widerstand (RC21, RC22) mit einem dedizierten Eingang (281, 282) der Detektionseinheit (28) verbunden ist,
- einen zweiten Hauptanschluss (SC12, SC22), der mit einem Masseanschluss verbunden ist, und
- einen Steuerungsanschluss (GC12, GC22), der über einen Widerstand (RC13) mit einem Versorgungsanschluss der Steuerschaltung verbunden ist, wobei der Versorgungsanschluss eine Versorgungsspannung (Vdd) ausschließlich außerhalb der Ruhebetriebsart empfängt.

12. Mehrphasige drehende elektrische Maschine (300), die ein Steuerungs- und Leistungsmodul (100) nach einem der Ansprüche 1 bis 11 umfasst.

13. Umkehrbare drehende elektrische Maschine (300), die ein Steuerungs- und Leistungsmodul (100) nach einem der Ansprüche 1 bis 12 umfasst.

## Claims

1. Control and power module (100) for rotating electric machine (300) comprising:
- a bridge of circuit breakers (3);
- a plurality of pilot circuits (10, 20, 30) associated with the said bridge of circuit breakers, for piloting the said bridge (3);
- a control circuit (2) which generates, in an active mode of the machine, control signals intended for the pilot circuits; and
- a plurality of communication links (21 to 26) between the said pilot circuits (10, 20, 30) and the said control circuit (2); and
in an active mode of the machine (300), all the links of the said plurality of links (21 to 26) being used to transmit the said control signals, from the control circuit (2) to the said pilot circuits (10, 20, 30), useful for performing a function related to the active mode of the said machine,
***characterized in that**,*
in a quiescent mode of the machine (300), first (21) and second (22) communication links of the said plurality of communication links (21 to 26) are used to transmit at least one first (PHU) and one second (PHV) phase information item, from the said piloting circuits (10, 20, 30) to the said control circuit (2); and
the control circuit (2) comprises a detection unit (28) for receiving, at least in the quiescent mode, a first (PHU) and a second (PHV) phase information item and for emitting a wakeup signal (SWU) controlling a switching of the machine to an alternator mode of the said active mode should a phase shift be detected between the said first and second phase information items.

2. Control and power module according to Claim 1, in which the first and second communication links are phase synchronization links, the said phase synchronization links being adapted to transmit phase control signals (SCU, SCV, SCW) to an associated pilot circuit during the active mode.

3. Control and power module according to Claim 1 or 2, in which the plurality of communication links (21 - 26) are bidirectional links.

4. Control and power module according to any one of Claims 1 to 3, in which the plurality of communication links (21 - 26) are control links.

5. Control and power module according to Claim 1, in which, each first and second communication link (21, 22) is coupled to a respective end of phase windings of the machine, a phase information item (PHU, PHV) arising from a phase winding; and, in which the associated pilot circuit (10) comprises switching means (M12, R11-R13) for isolating the said link (21, 22) from the phase information item outside of the quiescent mode.

6. Control and power module according to Claim 5, in which the switching means (M12, R11-R13) comprise a controlled circuit breaker (M12) having:
- a first main terminal (D12) connected to a communication link (21) via a first resistor (R11) and to an output (SH/DL) of the associated pilot circuit, intended to be coupled to an end of a phase winding via a second resistor (R12),
- a second main terminal (S12) coupled to a ground terminal (GND), and
- a control terminal (G12) coupled to a supply terminal (ALG) of the associated pilot circuit, which supply terminal receives a supply voltage (ALG) solely outside of the quiescent mode.

7. Control and power module according to any one of Claims 1 to 6, in which the phase shift is detected by detecting a differential amplitude between the said first and second phase information items (PHU, PHV).

8. Control and power module according to Claim 7, in which the detection unit (28) comprises threshold-type comparator means (Q1, Q2) designed to emit the wakeup signal (SWU) when the said differential amplitude is greater than a determined threshold value (Vbe).

9. Control and power module according to Claim 8, in which the threshold-type comparator means comprise a bipolar transistor.

10. Control and power module according to any one of Claims 1 to 9, in which the control circuit (2) comprises switching means (MC12, RC11-RC13, MC22, RC21-RC23) for isolating the said detection unit (28) from the said first (PHU) and second (PHV) phase information items outside of the quiescent mode.

11. Control and power module according to Claim 10, in which the switching means (MC12, RC11-RC13, MC22, RC21-RC23) of the detection unit (28) comprise, for each of the first and second communication links (21,22), a controlled circuit breaker (MC12, MC22) having:
- a first main terminal (DC12, DC22) connected to the said communication link (21,22) via a first resistor (RC11, RC21) and to a dedicated input (281, 282) of the detection unit (28) via a second resistor (RC21, RC22),
- a second main terminal (SC12, SC22) connected to a ground terminal, and
- a control terminal (GC12, GC22) connected to a supply terminal of the control circuit via a resistor (RC13), which supply terminal receives a supply voltage (Vdd) solely outside of the quiescent mode.

12. Polyphase rotating electric machine (300) comprising a control and power module (100) according to any one of Claims 1 to 11.

13. Reversible rotating electric machine (300) comprising a control and power module (100) according to any one of Claims 1 to 12.
